# EUROPEAN PATENT SPECIFICATION

(11) **EP 2 827 720 B1**
(45) Date of publication and mention of the grant of the patent: **06.01.2016**
(21) Application number: 13703744.6
(22) Date of filing: 24.01.2013
(51) Int. Cl.: A23G 3/00, A23G 3/34, A23G 3/02, A23G 3/12, A23G 3/20

(54) **MACHINE FOR PRODUCING FOOD PRODUCTS**
MASCHINE ZUR HERSTELLUNG VON NAHRUNGSMITTELN
MACHINE DE PRODUCTION DE PRODUITS ALIMENTAIRES

(30) Priority: 22.03.2012 IT BG20120016
(43) Date of publication of application: 28.01.2015
(73) Proprietor: Nuova Euromec S.r.l., 24057 Martinengo (BG) (IT)
(72) Inventor: RIZZI, Roberto, I-24123 Bergamo (IT); RIZZI, Mario, I-24057 Martinengo (BG) (IT)
(74) Representative: Giavarini, Francesco
(86) International application number: PCT/EP2013/051335
(87) International publication number: WO 2013/139505

(56) References cited:
- EP-A1- 0 736 257
- GB-A- 466 735
- GB-A- 1 405 861
- US-A- 4 068 993

## Description

The present invention relates to a machine for producing food products. In particular, the present invention relates to a machine for producing confectionery products and more in particular a machine for producing confectionery products such as sweets, chewing gum, bubble gum of soft type and provided with a filling consisting of a soft product, such as: jam, chocolate cream or similar creams, fondant, concentrated glucose syrup, a gummy mass of pectin and/or starch and/or gelatine or other gelling agents, and similar products.

Within the scope of food products in general, and in particular confectionery products, there are known products consisting of a soft outer portion, of a first food, for example moulded soft sugar caramel, an inner core of a second product, generally with a taste and/or consistency and/or properties different from the first product.

At industrial level the production of these confectionery products is not easy as insertion of the filling product, forming the inner core, inside a soft outer portion, with a density and/or properties different from the first product, presents considerable difficulties. In particular, using prior art industrial machinery it is not possible to completely close the soft outer portion or this is obtained with a loss of the filling. This causes a reduction in the quality of the confectionery product produced, as the quantity of filling inserted stably into the soft outer portion is not fully controllable. To overcome these problems at least in part, unless one is willing to accept a compromise in quality, the production of these products generally takes place through craft or semi-craft processes or through systems for pouring the sugar mass in liquid form.

In fact, through moulding systems conventionally used to prepare, for example, soft filled sweets or chewing gum, industrial machines are unable to correctly perform closing of the soft outer portion of the type described previously with liquid, semi-liquid or cream fillings, even if at the same density as the outer product.

However, with craft type production it is not possible to obtain products of homogeneous quality and, moreover, productivity is low, resulting in a high cost of these products.

It would therefore be desirable to obtain a machine for producing these products at industrial level that makes it possible to expand and significantly diversify the offer of food products, in particular of confectionery products on the market.

It would be desirable for this machine to enable the production of confectionery products with a soft shell provided with a filling, ensuring the quantity of filling that must be provided in the product, without losing filling during the moulding step of the same product.

EP 0736257, GB 466735, GB 1405861 and US 4068995 disclose apparatus comprising movable mould halves for the shaping of food products.

Finally, it would be desirable for this machine to enable the automatic and continuous production of confectionery products according to the description above.

The aim of the present invention is therefore to provide a machine for producing food products, and in particular confectionery products. In particular, the aim of the present invention is to provide a machine for producing confectionery products with soft outer portion and filled.

Within the aforesaid aim, an object of the present invention is to provide a machine for producing food products, and in particular confectionery products comprising a soft outer portion produced with a first food product and an inner part produced with a second food product having properties different from the first, and in particular a semi-liquid or creamy product.

A further object of the present invention is to provide a machine for producing food products of the aforesaid type so as to ensure containment of the filling during the step to produce and close the product. In particular, an object of the present invention is to provide a machine capable of ensuring the correct quantity of filling inside the confectionery product to be produced.

A further object of the present invention is to provide a machine for producing food products of the aforesaid type which makes it possible to obtain a high level of production of industrial type.

Another object of the present invention is to provide a machine for producing food products which makes it possible to obtain a high level of homogeneity in the quality of these food products.

Yet another object of the present invention is to provide a machine for producing food products which makes it possible to quickly and effectively vary the type of this product. One more object of the present invention is to provide a machine for producing food products which offers assurance of safety, reliability, ease of maintenance and with which it is possible to obtain products at competitive costs.

The aforesaid objects are achieved using a machine for producing food products comprising a supporting structure, a loading portion of a precursor of the food products and a moulding station of the food products, the moulding station being characterized in that it comprises a first and a second plurality of half-moulds opposite each other and movable in succession between a first rest position, in which at least one of the first and second pluralities of half-moulds is not in contact with the precursor, and a preforming position, in which the half-moulds are positioned opposite each other to exert a first forming pressure on the precursor, and between a second rest position, in which at least one of the first and second pluralities of half-moulds is not in contact with the precursor, and a forming position, in which the half-moulds are positioned opposite each other to exert a second forming and cutting pressure on the precursor to produce food products.

Moreover, the objects above are achieved using a method for producing food products using at least two half-moulds, opposite each other and movable, acting on a precursor of the food products, characterized in that it comprises the following steps:
- adjusting the preforming distance to which to move, and/or the preforming pressure to apply to, the half-moulds for movement to the preforming position;
- adjusting the forming distance to which to move, and/or the forming pressure to apply to, the half-moulds for movement to the forming position;
- loading the precursor to be formed into the half-moulds;
- moving the half-moulds from a first rest position to the preforming position, and/or applying the preforming pressure to the half-moulds;
- moving the half-moulds from the preforming position to a second rest position, and/or releasing the preforming pressure;
- moving the half-moulds from the second rest position to the forming position, and/or applying the forming pressure to the half-moulds;
- unloading the food products formed.

The machine and the method according to the invention are particularly advantageous for producing confectionery products of soft type comprising a soft outer portion, of a first food, for example moulded soft sugar caramel, and in inner core of a second product, generally with a taste and/or consistency and/or properties different from the first product, also of soft type. For the purposes of the present invention, the term soft is intended as a confectionery product which can be compressed in any direction using the teeth and/or which can be chewed without being broken.

Using the machine and the method according to the invention, confectionary products of soft type are produced, for example a soft sugar caramel, a chewy fruit sweet, a soft milk or fruit sweet, chewing gum or bubble gum, homogeneously filled with a second soft food product, for example jam, cream, concentrated glucose syrup, or a gummy mass of a food product. The strip thus formed produces a containing structure with the first food product on the outside and the filling given by second food product, semi-liquid, creamy or gummy on the inside. Although the machine according to the invention is particularly suitable for producing products of the type described above, it can also be used to produce multi-component, multi-layer products, for example food products such as sweets or chewing gum with a sandwich structure (for example, having a central layer produced with one food product interposed between two outer layers, the same as or different from each other, different from said central layer), and to produce single component food products, such as soft chewy milk or fruit sweets.

Therefore, using the machine and the method according to the invention it is possible to produce the desired confectionery product with two consecutive moulding operations. The first moulding operation provides for initial forming of the product to be produced and the second moulding operation provides for final forming and related cutting. In this way, it is possible to preserve the content of the filling, preventing loss thereof along the cutting edges. Preferably, the moulding station is of rotary type, provided with first processing means and with second processing means, couplable in eccentric rotation to produce the processing seat of the precursor, the second processing means comprising a plurality of half-moulds, opposite each other and movable. Alternatively, the moulding station is of the chain type, provided with a first supporting and conveying chain and with a second processing chain, couplable in movement to produce the processing seat of the precursor, the second processing chain comprising the first and the second plurality of half-moulds opposite each other, the machine also comprising first operating means of the first and second chains for movement of the precursor and/or of the food products formed along a first direction of advance and second operating means for movement of the half-moulds.

In this way it is possible to utilize the sequential double moulding operation both using a machine of rotary type and using a machine of chain type, maximizing processing flexibility. Preferably, the first and second chains are mounted facing each other defining a work surface interposed therebetween, comprising a plurality of processing seats of the precursor at each of the first and second half-moulds opposite each other.

In this way, the shaped strip containing the filling, precursor of the food products to be obtained, is supported by the first chain and is sent to this work surface, where it undergoes the forming and cutting action by the half-moulds arranged on the second chain.

Preferably, the first and second pluralities of half-moulds are integral with the movement of the second chain along the first direction of advance.

In this way, movement of the first and second chains makes it possible to convey and simultaneously perform the operations of preforming, forming and cutting of the precursor strip.

Preferably, the first and the second pluralities of half-moulds are mounted sliding on said second chain so as to be movable, between the first rest position and the preforming position and/or between the second rest position and the forming position, along a second direction substantially perpendicular to the first direction of advance.

In this way, while the precursor strip advances along the direction of advance, the half-moulds are operated so as to move crosswise with respect to the direction of advance, in a substantially horizontal plane. This firstly enables moving to the closed position, to exert the preforming action, and subsequently to the open position and once again to the closed position, to exert the forming and cutting action of said food products from said precursor and, finally, once again to the open position to allow unloading of said food products formed. Preferably, the second operating means comprise a first and/or a second pair of shaped elements adapted to impart to the half-moulds a movement along the second direction to progressively move the half-moulds towards each other respectively in preforming position and/or in forming position. Even more preferably, the first and second pairs of shaped elements are substantially symmetrical and adapted to impart a synchronous movement respectively to the first and second pluralities of half-moulds.

In this way, operation of the half-moulds is ensured by the sole movement of the chain and by contact with the shaped elements, without the aid of further actuators.

Preferably, the processing seat comprises a slot for detachment of the food products formed, the machine being provided with stop means, at an unloading station, for ejection of the food products formed by detachment inside the slot.

In this way, unloading of the food products formed is obtained without the aid of further unloading actuators, through contact between these and the stop means, the same food products sliding along the processing seat inside the detachment slot.

Further features and advantages of the present invention will be more apparent from the description of the preferred embodiment, illustrated by way of non-limiting example in the accompanying figures, wherein:

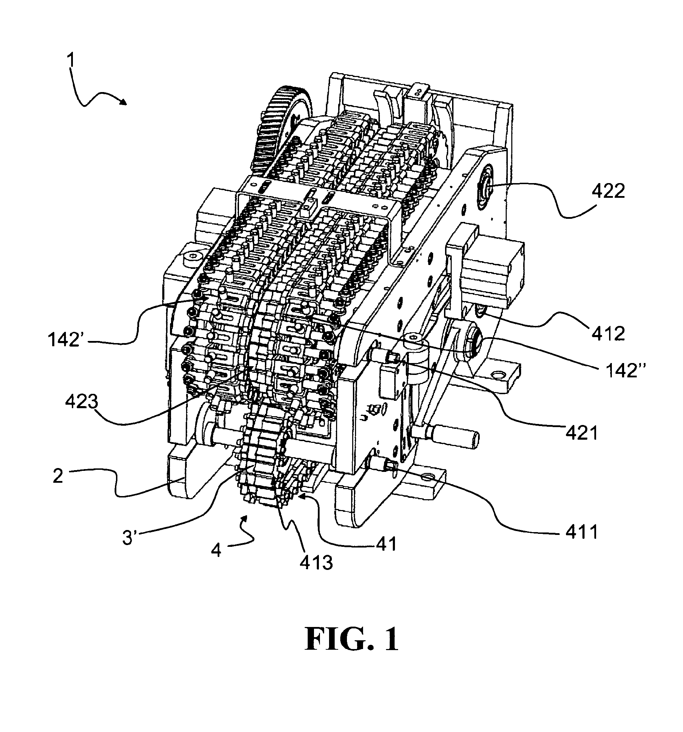

- Fig. 1 is a perspective view of an embodiment of the machine for producing food products according to the present invention;
- Fig. 2 is a top view of the machine of Fig. 1;
- Fig. 3 is a sectional side view of the machine of Fig. 1.

With reference to accompanying figures, there is illustrated an embodiment of a machine for producing food products 11, 11', 11" according to the present invention, indicated as a whole with the reference number 1.

The food products 11, 11', 11" obtainable with the machine 1 according to the present invention generally comprise a soft outer portion produced with a first food product and an inner part produced with a second food product generally having properties different from the first, and in particular a semi-liquid or creamy product.

By way of example, the outer portion can be produced with a first food product, for example a chewy fruit sweet, a soft milk or fruit sweet, chewing gum or bubble gum, while the inner part can, for example, consist of a second food product, preferably semi-liquid, creamy or gummy, for example jam, cream, concentrated glucose syrup, or a gummy mass of a food product.

The machine 1 for producing food products 11, 11', 11" generally comprises a supporting structure 2, a loading portion of a precursor 10 of the food products 11, 11', 11" and a moulding station 4 of the food products 11, 11', 11". At the opposite end of the moulding station 4 with respect to the loading portion 3 there is generally an unloading and collecting station of the food products 11, 11', 11 ", not illustrated in the figures.

One of the peculiar features of the machine 1 for producing food products 11, 11', 11" according to the present invention is given by the fact that said moulding station 4 comprises a first 142' and a second 142" plurality of half-moulds, opposite each other and movable in succession between a first rest position, in which at least one of the first 142' and second 142" pluralities of half-moulds is not in contact with the precursor 10, and a preforming position, in which the half-moulds 142', 142" are positioned opposite each other to exert a first forming pressure on the precursor 10, and between a second rest position, in which at least one of the first 142' and second 142" pluralities of half-moulds is not in contact with the precursor 10, and a forming position, in which the half-moulds 142', 142" are positioned opposite each other to exert a second forming and cutting pressure on the precursor 10 for producing the food products 11, 11', 11".

In particular, the machine 1, illustrated in the accompanying figures, has a moulding station 4 of chain type, provided with a first supporting and conveying chain 41 and with a second processing chain 42, couplable in movement to produce the processing seat 3 of the precursor 10. This latter is obtained by coupling between the first 41 and second 42 chains, these being provided respectively with first supporting and conveying plates 413 and with second upper closing plates 423.

In particular, the second processing chain 42 comprises a first 142' and a second 142" plurality of half-moulds, opposite each other and movable between a first rest position and a preforming position and between a second rest position and a forming and cutting position of the precursor 10, according to operating mechanisms described in detail below.

The machine 1 for producing food products 11, 11', 11" according to the present invention also comprises first operating means of the first 41 and second 42 chains for movement of the precursor 10 and of the food products 11, 11', 11" formed along a first direction of advance, for example consisting of one or more electric motors connected to the chains 41, 42. For example, this movement can be produced by at least one electric motor connected to each chain, or using a single motor connected with appropriate transmission systems to both chains.

Advantageously, the first 41 and the second 42 chains are mounted respectively on a first pair of horizontal axes 411, 412 and on a second pair of horizontal axes 421, 422, so as to produce a closed loop path around the respective pairs of axes.

The first chain 41 normally has a smaller width with respect to the second chain 42 and is mounted so as to be centred with respect to said second chain. In other words, the first 41 and the second 42 chains preferably have different widths and are mounted one over the other so that the respective central axes along the direction of advance fall in the same vertical plane, defining a work surface 50 interposed therebetween. The plurality of processing seats 3 are therefore produced along said surface 50 at each of the first 142' and second 142" half-moulds opposite each other and at the respective first supporting and conveying plates 413 and second upper closing plates 423.

Forming and cutting of the precursor 10 are produced by second operating means of the half-moulds 142', 142" which are adapted to move said half-moulds 142', 142" between a first rest position and a preforming position and between a second rest position and a forming and cutting position and vice versa. In particular, the first 142' and second 142" pluralities of half-moulds are integral with the movement of the second chain 42 along the first direction of advance. The movement of the half-moulds 142', 142", between the first rest position and the preforming position and between the second rest position and the forming position, takes place along a second direction substantially perpendicular to the first direction of advance, the half-moulds 142', 142" being mounted sliding on the second chain 42.

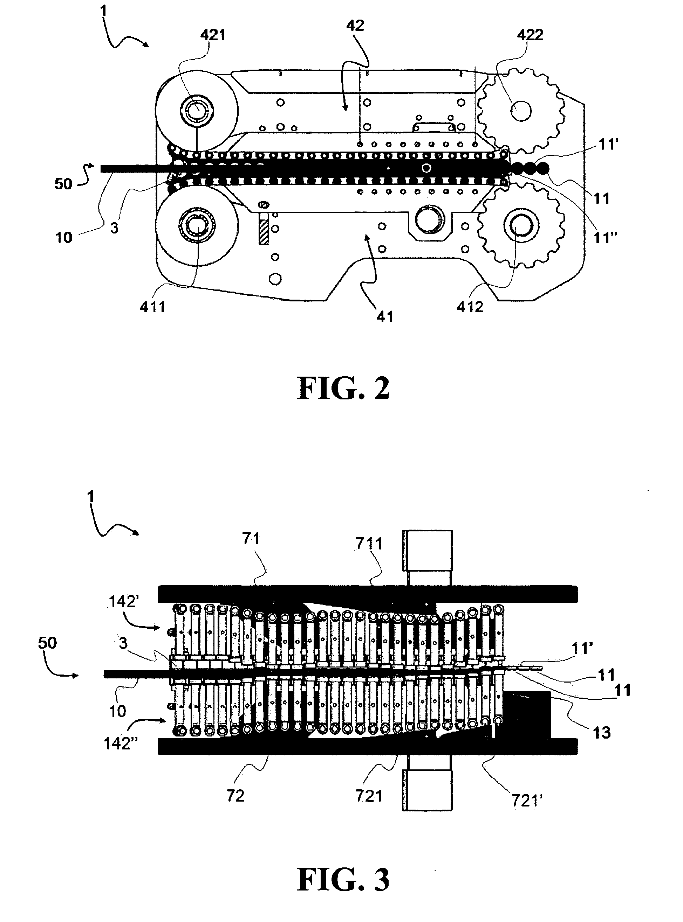

Advantageously, the second operating means comprise a first 71; 72 and a second 711; 721 pair of shaped elements adapted to impart to the half-moulds 142', 142" a movement along the second direction to progressively move the half-moulds 142', 142" towards each other respectively in preforming position and in forming position. These pairs of shaped elements 71, 72, 711, 721 are substantially symmetrical and adapted to impart a synchronous movement respectively to the first 142' and second 142" pluralities of half-moulds. In the embodiment described here, these shaped elements 71, 72, 711, 721 have a substantially triangular profile, as illustrated in Fig. 2, adapted to progressively and synchronously move the two half-moulds 142', 142" towards each other, as will be described in detail below. Ejection of the food products 11, 11', 11" formed is obtained in the portion opposite the loading portion of the machine 1. For this function, the processing seat 3 is provided with a slot 3', which interrupts the continuous surface of the first supporting and conveying plates 413 and of the second upper closing plates 423. Moreover, the machine 1 is provided in the same unloading portion with stop means 13 for ejection of said food products 11, 11', 11" formed. In particular, in the embodiment described, the stop means 13 comprise a blade mounted crosswise to the direction of advance of the half-moulds 142', 142" so that the food products 11, 11', 11" formed come into contact therewith sliding to the slot 3' and are then unloaded.

Operation of the machine 1 is described below in accordance with the method according to the present invention.

The outer part of the precursor is produced from a continuous strip, for example a U-shaped strip, produced with a first soft food product. The strip has a groove which is filled homogeneously with a second food product, for example jam, cream, concentrated glucose syrup, or a gummy mass of a food product. The edges of the strip are then folded, closed and cut to form a containing structure with the first soft food product on the outside and the filling given by the second food product, semi-liquid, creamy or gummy on the inside.

The strip is usually produced by a drawing machine or by an extruder, although different processing methods could also be used to produce it, and is fed to the machine 1 in the loading area.

From the loading portion, the shaped strip containing the filling is sent to the processing station 4 where it is picked up to be inserted along the work surface 50. Movement of the second chain 42 causes movement of the half-moulds 142', 142" along the direction of advance. Therefore, movement of the first 41 and second 42 chains makes it possible to simultaneously convey, preform and form and cut the shaped strip.

As the first 142' and the second 142" pluralities of half-moulds are mounted sliding on the second chain 42, so as to be movable between the first rest position and the preforming position and between the second rest position and the forming and cutting position, the half-moulds 142', 142" are constrained to the second chain 42 so as to follow it along the direction of advance. These half-moulds 142', 142", in the first and second rest positions, are spaced apart from each other, as illustrated, for example, in Figs. 2 and 3. Through the second operating means, the half-moulds 142', 142" are moved towards each other so as to close, coupling with the first supporting and conveying plates 413 and with the second upper closing plates 423, around the strip.

The machine 1 according to the present invention provides that the second operating means comprise a first 71, 711 and a second 72, 721 shaped element which are adapted to impart to the half-moulds 142', 142" a movement along the second direction different from that desired. In particular, the shaping of the elements 71, 711, 72, 721 is such as to produce a first progressive movement of the half-moulds 142', 142" towards each other during preforming and, subsequently, a second progressive movement of the half-moulds 142', 142" towards each other during forming and cutting, as will be described in detail below.

With reference to Figs. 2 and 3, advance of the first 41 and second 42 chains allows the strip forming the precursor of the food products 11, 11', 11" to be arranged on the work surface 50 formed between said first 41 and second 42 chains. In the accompanying figures, the direction of advance is from left to right.

Outside the work surface 50, the half-moulds 142', 142" are in the rest position, spaced apart from each other. Inside the work surface 50 there are positioned the first 71, 711 and second 72, 721 shaped elements which oblige the half-moulds 142', 142" to move progressively towards each other so as to close around the strip and cause firstly preforming and subsequently forming and cutting of the food products 11, 11', 11". In proximity of the exit from work surface 50 (right side of the figures), the first 71, 711 surfaces are shaped so as to allow the half-moulds 142', 142" to move progressively away from each other, to prevent sudden detachment of the material being processed. Instead, the second shaped surfaces 72, 721, have a sudden interruption of the profile in the point in which the half-moulds are closest to each other, thereby enabling unloading of the food products 11, 11', 11" formed, when, retracting together with the half-moulds 142', 142", they impact against the blade of the stop means 13.

In the present embodiment the first 71, 711 shaped surfaces are symmetrical with each other, as are the second 72, 721 shaped surfaces. This enables them to impart a substantially synchronous movement respectively to the first and second pluralities of half-moulds 142', 142" with which they come into contact. In other words, in this embodiment, the first 71, 711 and the second 72, 721 shaped surfaces have in pairs the same profile and are positioned in pairs in the same point along the direction of advance so as to cause simultaneous opening and closing of the first 142' and second 142" pluralities of half-moulds in the same position along the direction of advance.

Alternatively, these shaped surfaces could have different profiles, or be arranged in different points of the direction of advance, so as to move the first 142' and second 142" pluralities of half-moulds with different times and/or methods. Alternatively, the movement imposed by the shaped surfaces, the profile and spacing of which is determined according to the preforming and forming position to be reached by the half-moulds 142', 142", can be substituted by actuators for the same half-moulds 142', 142", optionally provided with pressure regulating means. In particular, these pressure regulating means should exert on the half-moulds 142', 142" a first preforming pressure, in the preforming point(s), and, subsequently, a second forming and cutting pressure, in the forming and cutting point(s).

In practice, with reference to Figs. 2 and 3, the profiles of the first portion of the first 71, 711 shaped elements are identical, causing simultaneous closing of the first 142' and second 142" pluralities of half-moulds, in the same position along the direction of advance, in the preforming position. Continuing along the direction of advance, the first 71 shaped surface extends further with respect to the first shaped surface 711. In this way, the first plurality of half-moulds 142' returns to the rest position with a delay with respect to the second plurality of half-moulds 142". Continuing along the direction of advance, the half-moulds 142', 142" again come into contact with a pair of shaped elements 72, 721. The profiles of the first portion of the second 72, 721 shaped elements are identical, causing simultaneous closing of the first 142' and second 142" pluralities of half-moulds, in the same position along the direction of advance, in the forming and cutting position. Continuing along the direction of advance, the second 721 shaped surface has a further portion 721' which extends to the unloading portion at the blade of the stop means 13. In this way, the first plurality of half-moulds 142' returns to the rest position immediately after the cut while the second direction plurality of half-moulds 142" returns to the rest position only an instant before contact with the blade, obtaining unloading of the food products 11, 11', 11" toward the side of the second half-moulds 142".

The shape and/or positioning of the first 71, 711 and second 72, 721 shaped elements can be varied according to needs.

In the embodiment illustrated, the half-moulds 142' and 142" preferably comprise supporting means for operative connection with the second chain 42, forming and cutting means for preforming and forming and cutting the food products 10 and means for operative coupling with the second operating means for their movement between the first rest position and the preforming position and between the second rest position and the forming and cutting position and vice versa.

In the embodiment illustrated, the half-moulds 142', 142" comprise forming and cutting means comprising a shaped head 60 adapted to impart a substantially elliptical shape to the food products 10. This shape can be different, so as to give, for example, a circular, square, rhomboid or star shape to said food products.

Moreover, in the embodiment illustrated the half-moulds 142', 142" comprise a support 65, in which there is mounted a spindle 61, which supports the shaped head 60 at one end. This spindle 61 is provided with guide means, for example a guide pin 63 adapted to slide in a groove 64 produced in said support 65, and to guide the travel of the spindle 61 in a direction substantially perpendicular to the first direction of advance. At the opposite end of the spindle 61 with respect to the shaped head 60 there are sliding means, consisting for example of rollers or wheels 62, adapted to slide on the shaped elements 71, 711, causing movement of the spindle 61 and consequently of the shaped head 60 between the first rest position and the preforming position and adapted to slide on the shaped element 72, 721 causing movement of the spindle 61 and consequently of the shaped head 60 between the second rest position and the forming and cutting position. Elastic means, for example springs, can be provided to ensure the return of the spindle 61 and of the shaped head 60 to the rest position. Alternatively, further shaped surfaces, which interact, for example, with the pin 63 during advance of the second chain 42, can be provided to return the half-moulds to the rest position. The second operating means can also consist of pneumatic or hydraulic devices, for example piston means, connected with the half-moulds 142', 142" and controlled electronically so as to move said half-moulds 142', 142" between the first rest position and the preforming position and, subsequently, between the second rest position and the forming and cutting position and vice versa.

In a further embodiment the machine according to the present invention can comprise a moulding station of rotary type. This moulding station is provided with first processing means and with second processing means, couplable in eccentric rotation to produce the processing seat of the precursor, in the same way as described previously for the machine of chain type. In this embodiment the plurality of half-moulds opposite each other and movable is positioned on the second processing means which produce the movement thereof.

Operation of the machine of rotary type is the same as that described previously. In this case, due to the eccentric assembly of the first processing means with respect to the second processing means, the half-moulds will perform preforming in a specific point of the circumference and forming and cutting in a subsequent point in which the first processing means and the second processing means coincide exactly.

With the machine for producing food products, in particular confectionery products, according to the present invention it is possible to achieve the aforesaid objects. In particular, the machine for producing food products, in particular confectionery products, of the invention makes it possible to obtain, in an industrially advantageous way, food products, and in particular confectionery products, comprising a soft outer portion produced with a first food product and a soft inner part produced with a second food product having properties different from the first, in particular, a semi-liquid or creamy product.

Although the machine according to the invention is particularly suitable for producing products of the type described previously, it can also be used to produce multi-component, multi-layer products, such as food products like sweets or chewing gum with a sandwich structure (for example, having a central layer produced with one food product interposed between two outer layers, the same as or different from each other, different from said central layer), and to produce single component food products, such as gummy sweets or the like.

## Claims

1. A machine (1) for producing food products (11, 11', 11 ") comprising a supporting structure (2), a loading portion of a precursor (10) of said food products (11, 11', 11 ") and a moulding station (4) of said food products (11, 11', 11"), **characterized in that** said moulding station (4) comprises a first (142') and a second (142") plurality of half-moulds opposite each other and movable in succession between a first rest position, in which at least one of said first (142') and second (142") pluralities of half-moulds is not in contact with said precursor (10), and a preforming position, in which said half-moulds (142', 142") are positioned opposite each other to exert a first forming pressure on said precursor (10), and between a second rest position, in which at least one of said first (142') and second (142") pluralities of half-moulds is not in contact with said precursor (10), and a forming position, in which said half-moulds (142', 142") are positioned opposite each other to exert a second forming and cutting pressure on said precursor (10) for producing said food products (11, 11', 11").

2. The machine according to claim 1, **characterized in that** said moulding station is of rotary type, provided with first processing means and with second processing means, couplable in eccentric rotation to produce the processing seat of said precursor, said second processing means comprising a plurality of said half-moulds opposite each other and movable.

3. The machine (1) according to claim 1, **characterized in that** said moulding station (4) is of chain type, provided with a first supporting and conveying chain (41) and with a second processing chain (42), couplable in movement to produce the processing seat (3) of said precursor (10), said second processing chain (42) comprising said first (142') and said second (142") pluralities of half-moulds opposite each other, said machine (1) also comprising first operating means of said first (41) and second (42) chains for movement of said precursor (10) and/or of said food products (11, 11', 11 ") formed along a first direction of advance and second operating means for movement of said half-moulds (142', 142").

4. The machine (1) according to claim 3, **characterized in that** said first (41) and second (42) chains are mounted facing each other defining a work surface (50) interposed therebetween, comprising a plurality of said processing seats (3) of said precursor (10) at each of said first (142') and second (142") half-moulds opposite each other.

5. The machine (1) according to claim 3 or 4, **characterized in that** said first (142') and second (142") pluralities of half-moulds are integral with the movement of said second chain (42) along said first direction of advance.

6. The machine (1) according to one or more of claims 3 to 5, **characterized in that** said first (142') and said second (142") pluralities of half-moulds are mounted sliding on said second chain (42) so as to be movable, between said first rest position and said preforming position and/or between said second rest position and said forming position, along a second direction substantially perpendicular to said first direction of advance.

7. The machine (1) according to claim 6, **characterized in that** said second operating means comprise a first (71; 72) and/or a second (711; 721) pair of shaped elements adapted to impart to said half-moulds (142', 142") a movement along said second direction to progressively move said half-moulds (142', 142") towards each other respectively in preforming position and/or in forming position.

8. The machine (1) according to claim 7, **characterized in that** said first (71, 72) and second (711, 721) pairs of shaped elements are substantially symmetrical and are adapted to impart a synchronous movement respectively to said first (142') and second (142") pluralities of half-moulds.

9. The machine (1) according to one or more of claims 2 to 8, **characterized in that** said processing seat (3) comprises a slot (3') for detachment of said food products (11, 11', 11") formed, said machine (1) being provided with stop means (13), at an unloading station, for ejection of said food products (11, 11', 11") formed by detachment inside said slot (3').

10. A method for producing food products (11, 11', 11 ") using at least two half-moulds (142', 142") opposite each other and movable, acting on a precursor (10) of said food products (11, 11', 11 "), **characterized in that** it comprises the following steps:
- adjusting the preforming distance to which to move, and/or the preforming pressure to apply to, said half-moulds (142', 142") for movement to the preforming position;
- adjusting the forming distance to which to move, and/or the forming pressure to apply to, said half-moulds (142', 142") for movement to the forming position;
- loading said precursor (10) to be formed into said half-moulds (142', 142");
- moving said half-moulds (142', 142") from a first rest position to said preforming position, and/or applying said preforming pressure to said half-moulds (142', 142");
- moving said half-moulds (142', 142") from said preforming position to a second rest position, and/or releasing said preforming pressure;
- moving said half-moulds (142', 142") from said second rest position to said forming position, and/or applying said forming pressure to said half-moulds (142', 142");
- unloading said food products (11, 11', 11 ") formed.

## Patentansprüche

1. Maschine (1) zum Herstellen von Nahrungsmittelprodukten (11, 11', 11 "), aufweisend eine Tragestruktur (2), einen Ladeabschnitt eines Vorläufers (10) der Nahrungsmittelprodukte (11, 11', 11 ") und eine Formungsstation (4) der Nahrungsmittelprodukte (11, 11', 11 "), die **dadurch gekennzeichnet ist, dass** die Formungsstation (4) eine erste (142') und eine zweite (142") Mehrzahl an Halbformteilen aufweist, die einander gegenüberliegen und aufeinanderfolgend zwischen einer ersten Ruheposition, in der zumindest eine von der ersten (142') und zweiten (142") Mehrzahl an Halbformteilen den Vorläufer (10) nicht berührt, und einer Vorformposition, in der die Halbformteile (142', 142") einander gegenüberliegen, um einen ersten Formdruck auf den Vorläufer (10) auszuüben, und zwischen einer zweiten Ruheposition, in der zumindest eine von der ersten (142') und der zweiten (142") Mehrzahl an Halbformteilen den Vorläufer (10) nicht berührt, und einer Formposition, in der die Halbformen (142', 142") einander gegenüberliegen, um einen zweiten Form- und Schneidedruck auf den Vorläufer (10) auszuüben, um die Nahrungsmittelprodukte (11, 11', 11 ") herzustellen, bewegt werden können.

2. Maschine nach Anspruch 1, **dadurch gekennzeichnet, dass** die Formungsstation drehend ist und über eine erste Verarbeitungseinrichtung und eine zweite Verarbeitungseinrichtung verfügt, die in exzentrischer Drehung gekoppelt werden können, um den Verarbeitungssitz des Vorläufers herzustellen, wobei die zweite Verarbeitungseinrichtung eine Mehrzahl an den sich gegenüberliegenden und beweglichen Halbformteilen aufweist.

3. Maschine (1) nach Anspruch 1, **dadurch gekennzeichnet, dass** die Formungsstation (4) einem Kettentyp entspricht und über eine erste Trage- und Förderkette (41) und eine zweite Verarbeitungskette (42) verfügt, die in einer Bewegung gekoppelt werden können, um den Verarbeitungssitz (3) des Vorläufers (10) herzustellen, wobei die zweite Verarbeitungskette (42) die erste (142') und die zweite (142") Mehrzahl an Halbformteilen, die sich gegenüberliegen, aufweist, wobei die Maschine (1) auch eine erste Betriebseinrichtung der ersten (41) und zweiten (42) Kette zum Bewegen des Vorläufers (10) und/oder der Nahrungsmittelprodukte (11, 11', 11 "), die entlang einer ersten Vorwärtsrichtung ausgebildet ist, und eine zweite Betriebseinrichtung zum Bewegen der Halbformteile (142', 142") aufweist.

4. Maschine (1) nach Anspruch 3, **dadurch gekennzeichnet, dass** die erste (41) und zweite (42) Kette einander zugewandt angebracht sind und so eine Arbeitsoberfläche (50) abgrenzen, die sich dazwischen befindet und eine Mehrzahl an Verarbeitungssitzen (3) des Vorläufers (10) an jedem der ersten (142') und zweiten (142") Halbformteile, die einander gegenüberliegen, aufweist.

5. Maschine (1) nach Anspruch 3 oder 4, **dadurch gekennzeichnet, dass** die erste (142') und zweite (142") Mehrzahl an Halbformteilen mit der Bewegung der zweiten Kette (42) entlang der ersten Vorwärtsrichtung zusammenfallen.

6. Maschine (1) nach einem oder mehreren der Ansprüche 3 bis 5, **dadurch gekennzeichnet, dass** die erste (142') und die zweite (142") Mehrzahl an Halbformteilen gleitend an der zweiten Kette (42) befestigt sind, um zwischen der ersten Ruheposition und der Vorformposition und/oder zwischen der zweiten Ruheposition und der Formposition entlang einer zweiten Richtung beweglich zu sein, die zu der ersten Vorwärtsrichtung im Wesentlichen rechtwinklig verläuft.

7. Maschine (1) nach Anspruch 6, **dadurch gekennzeichnet, dass** die zweite Betriebseinrichtung ein erstes (71; 72) und/oder ein zweites (711; 721) Paar geformter Elemente aufweist, die darauf ausgelegt sind, eine Bewegung entlang der zweiten Richtung an die Halbformteile (142', 142") zu übermitteln, um die Halbformteile (142', 142") progressiv aufeinander zuzubewegen, damit sie die Vorformposition und/oder in die Formposition erreichen.

8. Maschine (1) nach Anspruch 7, **dadurch gekennzeichnet, dass** das erste (71, 72) und zweite (711, 721) Paar geformter Elemente im Wesentlichen symmetrisch sind und darauf ausgelegt sind, eine synchrone Bewegung an die erste (142') bzw. an die zweite (142") Mehrzahl an Halbformteilen zu übermitteln.

9. Maschine (1) nach einem oder mehreren der Ansprüche 2 bis 8, **dadurch gekennzeichnet, dass** der Verarbeitungssitz (3) einen Schlitz (3') zum Entfernen der gebildeten Nahrungsmittelprodukte (11, 11', 11 ") aufweist, wobei die Maschine (1) mit einer Stoppeinrichtung (13) an einer Entladestation versehen ist, um die durch Entfernen in dem Schlitz (3') gebildeten Nahrungsmittelprodukte (11, 11', 11") auszustoßen.

10. Verfahren zum Herstellen von Nahrungsmittelprodukten (11, 11', 11") mithilfe von zumindest zwei Halbformteilen (142', 142"), die einander gegenüberliegen und beweglich sind und auf einen Vorläufer (10) der Nahrungsmittelprodukte (11, 11', 11 ") wirken, **dadurch gekennzeichnet, dass** es die folgenden Schritte aufweist:
- Einstellen der Vorformentfernung, auf die die Halbformteile (142', 142") bewegt werden sollen, und/oder des Vorformdrucks, der auf die Halbformteile (142', 142") ausgeübt werden soll, damit sie sich auf die Vorformposition bewegen;
- Einstellen der Formentfernung, auf die die Halbformteile (142', 142") bewegt werden sollen, und/oder des Formdrucks, der auf die Halbformteile (142', 142") ausgeübt werden soll, damit sie sich auf die Formposition bewegen;
- Laden des auszubildenden Vorläufers (10) in die Halbformteile (142', 142");
- Bewegen der Halbformteile (142', 142") aus einer ersten Ruheposition auf die Vorformposition und/oder Ausüben des Vorformdrucks auf die Halbformteile (142', 142");
- Bewegen der Halbformteile (142', 142") aus der Vorformposition auf eine zweite Ruheposition, und/oder Lösen des Vorformdrucks;
- Bewegen der Halbformteile (142', 142") aus der zweiten Ruheposition auf die Formposition und/oder Ausüben des Formdrucks auf die Halbformteile (142', 142");
- Entladen der gebildeten Nahrungsmittelprodukte (11, 11', 11").

## Revendications

1. Machine (1) pour produire des produits alimentaires (11, 11', 11") comprenant une structure de support (2), une partie de chargement d'un précurseur (10) desdits produits alimentaires (11, 11', 11") et une station de moulage (4) desdits produits alimentaires (11, 11', 11"), **caractérisée en ce que** ladite station de moulage (4) comprend une première (142') et une seconde (142") pluralité de demi-moules opposés entre eux et mobiles en succession entre une première position de repos, dans laquelle au moins l'une desdites première (142') et seconde (142") pluralités de demi-moules n'est pas en contact avec le ledit précurseur (10), et une position de préformage, dans laquelle lesdits demi-moules (142', 142") sont positionnés à l'opposé l'un de l'autre pour exercer une première pression de formage sur ledit précurseur (10), et entre une seconde position de repos dans laquelle au moins l'une desdites première (142') et seconde (142") pluralités de demi-moules n'est pas en contact avec ledit précurseur (10) et une position de formage dans laquelle lesdits demi-moules (142', 142") sont positionnés à l'opposé l'un de l'autre pour exercer une seconde pression de formage et de coupe sur ledit précurseur (10) afin de produire lesdits produits alimentaires (11, 11', 11").

2. Machine selon la revendication 1, **caractérisée en ce que** ladite station de moulage est du type rotatif, prévue avec un premier moyen de traitement et avec un second moyen de traitement, pouvant être couplés en rotation excentrique afin de produire le siège de traitement dudit précurseur, ledit second moyen de traitement comprenant une pluralité desdits demi-moules opposés entre eux et mobiles.

3. Machine (1) selon la revendication 1, **caractérisée en ce que** ladite station de moulage (4) est du type à chaîne, prévue avec une première chaîne de support et de transport (41) et avec une seconde chaîne de traitement (42), pouvant être couplée en mouvement afin de produire le siège de traitement (3) dudit précurseur (10), ladite seconde chaîne de traitement (42) comprenant ladite première (142') et ladite seconde (142") pluralité de demi-moules opposés entre eux, ladite machine (1) comprenant également un premier moyen de fonctionnement desdites première (41) et seconde (42) chaînes pour le mouvement dudit précurseur (10) et/ou desdits produits alimentaires (11, 11', 11") formés le long d'une première direction d'avancement et un second moyen d'actionnement pour le mouvement desdits demi-moules (142', 142").

4. Machine (1) selon la revendication 3, **caractérisée en ce que** lesdites première (41) et seconde (42) chaînes sont montées face à face, définissant une surface de travail (50) intercalée entre elles, comprenant une pluralité desdits sièges de traitement (3) dudit précurseur (10) au niveau de chacun desdits premier (142') et second (142") demi-moules opposés entre eux.

5. Machine (1) selon la revendication 3 ou 4, **caractérisée en ce que** ladite première (142') et seconde (142") pluralités de demi-moules sont solidaires avec le mouvement de ladite seconde chaîne (42) le long de ladite première direction d'avancement.

6. Machine (1) selon une ou plusieurs des revendications 3 à 5, **caractérisée en ce que** ladite première (142') et ladite seconde (142") pluralité de demi-moules sont montées de manière coulissante sur ladite seconde chaîne (42) afin d'être mobiles, entre ladite première position de repos et ladite position de préformage et/ou entre ladite seconde position de repos et ladite position de formage, le long d'une seconde direction sensiblement perpendiculaire à ladite première direction d'avancement.

7. Machine (1) selon la revendication 6, **caractérisée en ce que** ledit second moyen de fonctionnement comprend une première (71 ; 72) et/ou une seconde (711 ; 721) paire d'éléments conformés adaptés pour communiquer auxdits demi-moules (142', 142") un mouvement le long de ladite seconde direction afin de déplacer progressivement lesdits demi-moules (142', 142") l'un vers l'autre respectivement dans la position de préformage et/ou dans la position de formage.

8. Machine (1) selon la revendication 7, **caractérisée en ce que** lesdites première (71, 72) et seconde (711, 721) paires d'éléments conformés sont sensiblement symétriques et sont adaptées pour communiquer un mouvement synchrone respectivement auxdites première (142') et seconde (142") pluralités de demi-moules.

9. Machine (1) selon une ou plusieurs des revendications 2 à 8, **caractérisée en ce que** ledit siège de traitement (3) comprend une fente (3') pour le détachement desdits produits alimentaires (11, 11', 11") formés, ladite machine (1) étant prévue avec des moyens de butée (13), au niveau d'une station de déchargement, pour l'éjection desdits produits alimentaires (11, 11', 11") formés par détachement à l'intérieur de ladite fente (3').

10. Procédé pour produire des produits alimentaires (11, 11', 11") en utilisant au moins deux demi-moules (142', 142") opposés entre eux et mobiles, agissant sur un précurseur (10) desdits produits alimentaires (11, 11', 11"), **caractérisé en ce qu'**il comprend les étapes suivantes consistant à :
- ajuster la distance de préformage sur laquelle déplacer, et/ou la pression de préformage à appliquer sur lesdits demi-moules (142', 142") pour le mouvement dans la position de préformage ;
- ajuster la distance de formage sur laquelle déplacer et/ou la pression de formage à appliquer sur lesdits demi-moules (142', 142") pour le mouvement dans la position de formage ;
- charger ledit précurseur (10) à former dans lesdits demi-moules (142', 142") ;
- faire passer lesdits demi-moules (142', 142") d'une première position de repos à ladite position de préformage, et/ou appliquer ladite pression de préformage sur lesdits demi-moules (142', 142") ;
- faire passer lesdits demi-moules (142', 142") de ladite position de préformage à une seconde position de repos, et/ou libérer ladite pression de préformage ;
- faire passer lesdits demi-moules (142', 142") de ladite seconde position de repos à ladite position de formage, et/ou appliquer ladite pression de formage sur lesdits demi-moules (142', 142") ;
- décharger lesdits produits alimentaires (11, 11', 11") formés.
